# EUROPÄISCHE PATENTSCHRIFT

(11) **EP 1 712 894 B1**
(45) Veröffentlichungstag und Bekanntmachung des Hinweises auf die Patenterteilung: **09.09.2009**
(21) Anmeldenummer: 06111901.2
(22) Anmeldetag: 29.03.2006
(51) Int. Cl.: G01N 15/14, G01N 21/53, G01N 21/94, G05D 16/04, F15B 21/04, F15B 19/00, G01N 1/20, G01N 21/85

(54) **Partikelzähler für Fremdpartikel in einem Flüssigkeitsstrom**
Particle counter for foreign particles in a liquid flow
Compteur de particules pour particules étrangères dans un flux liquide

(30) Priorität: 11.04.2005 DE 102005016761
(43) Veröffentlichungstag der Anmeldung: 18.10.2006
(73) Patentinhaber: Mahle International GmbH, 70376 Stuttgart (DE)
(72) Erfinder: Gröner, Alfred, 74613, Öhringen (DE); Klotz, Markus, 75278, Bad Liebenzell (DE)
(74) Vertreter: Bongen, Renaud & Partner

(56) Entgegenhaltungen:
- EP-A- 0 427 908
- WO-A-20/05038434
- DE-A1- 2 062 698
- DE-A1- 10 331 121
- DE-C1- 10 127 021
- US-B1- 6 282 947
- US-B1- 6 573 696

## Beschreibung

Die Erfindung betrifft einen nach dem Abdunkelungs- bzw. Lichtblockadeverfahren arbeitenden Partikelzähler zum Zählen von Fremdpartikeln in einem Flüssigkeitsstrom, insbesondere in einem Hydraulikflüssigkeitsstrom, nach dem Oberbegriff des Patentanspruchs 1.

Ein solcher Partikelzähler ist aus DE 89 12 584 U1 bekannt. Bei jenem Partikelzähler ist zur Erzielung einer konstanten Strömungsgeschwindigkeit innerhalb des Messkanales eine aufwendige Volumenstromregeleinrichtung erforderlich.

Eine gattungsgemäße Messeinrichtung ist weiterhin bekannt aus DE 20 62 698 A1 und beschrieben in der nicht vorveröffentlichten WO 2005/038434 A1. Mit den Partikelzählern dieser Einrichtungen können nur konstante Volumenströme mit einem definiert einzuhaltenden Volumenstrom bezüglich ihres Partikelgehaltes überprüft werden, wobei der konstante Volumenstrom jeweils durch Konstant-Fördermittel erreicht werden muss.

Die Erfindung beschäftigt sich mit dem Problem, einen möglichst einfach aufgebauten und dennoch mit hoher Messgenauigkeit arbeitenden Partikelzähler zu schaffen. Ein solcher Partikelzähler soll Bestandteil einer von zu messender Flüssigkeit durchströmten Arbeitseinrichtung sein. Bei der Flüssigkeit soll es sich insbesondere um Hydrauliköl einer hydraulisch arbeitenden Einrichtung handeln, dessen Verschmutzungsgrad mit einem solchen Partikelzähler stationär ermittelt werden kann und zwar in beliebig kurzen Zeitabständen. Auch soll es möglich sein, unterschiedliche Partikelgrößen getrennt erkennen zu können. Insbesondere soll eine kontinuierliche Überwachung des Verschmutzungsgrades einer solchen Hydraulikflüssigkeit mit einem erfindungsgemäßen Partikelzähler möglich sein.

Die durch die kennzeichnenden Merkmale des Anspruchs 1 definierte Erfindung beruht dabei auf folgendem allgemeinen Gedanken.

Um eine Messung der Anzahl und Größe von in einem Messstrom durch einen Messkanal strömender Flüssigkeit innerhalb einer Lichtschranke mit einem Abdunkelungs- bzw. Lichtblockadeverfahren ermitteln zu können, muss der Volumenstrom je Messzeit bekannt sein. Auf einfache Weise bekannt ist die Größe eines Volumenstromes beispielsweise, wenn dieser auf einen bestimmten Wert eingestellt und konstant gehalten werden kann. Ein konstanter Volumenstrom ergibt sich wiederum zwangsweise in einem geometrisch konstant gehaltenen Strömungskanal bei einem konstant vorgegebenen Druckgefälle längs dieses Strömungskanals. Zusätzliche Voraussetzung ist allerdings, dass die strömende Flüssigkeit einen konstanten Viskositätswert besitzt. Da der Viskositätswert einer Flüssigkeit in der Regel und zwar insbesondere bei einer Hydraulikflüssigkeit temperaturabhängig ist, setzt bei einem konstanten Druckgefälle ein konstanter Volumenstrom Temperaturgleichheit voraus. Diese beiden vorgenannten Voraussetzungen für einen konstanten Volumenstrom werden erfindungsgemäß bezüglich eines konstanten Druckabfalls durch ein federbelastet arbeitendes Druckreduzierventil und bezüglich einer gleichbleibenden Temperatur durch den Einsatz einer Heiz- oder Kühleinrichtung zur Beeinflussung der Temperatur des zu messenden Flüssigkeitsstromes erreicht. Die Kühl- oder Heizeinrichtung wird dabei so ausgelegt, dass zur Durchführung einer Messung eine Temperatur vorliegt, die vorzugsweise außerhalb einer möglichen Betriebstemperatur liegt. Dadurch ist gewährleistet, dass unabhängig von augenblicklichen Betriebstemperaturen stets eine Messung bei einer gleichen, außerhalb einer Betriebstemperatur liegenden Messtemperatur erfolgen kann. In der Regel wird eine Heizeinrichtung eingesetzt, durch die ein Messen, das heißt ein aktiver Betrieb eines Partikelzählers stets bei einer oberhalb der Betriebstemperatur der bezüglich ihrer Partikelbeladung zu messenden Flüssigkeit liegt. Durch diese erfindungsgemäße Lösung kann ein kompliziert aufgebauter und häufig wenig messgenau arbeitender Volumenstromregler, wie er beispielsweise bei dem vorbekannten Stand der Technik nach der eingangs zitierten DE 89 12 584 U1 eingesetzt werden muss, eingespart werden.

Vorteilhafte und zweckmäßige Ausgestaltungen der Erfindung sind Gegenstand der Unteransprüche und werden anhand eines Ausführungsbeispieles nachstehend noch näher erläutert. Ein solches Ausführungsbeispiel ist in der Zeichnung dargestellt.

Die erfindungsgemäße Einrichtung kann insbesondere auch zur Messung und Überwachung des Verschmutzungsgrades von Getriebeöl vorteilhaft eingesetzt werden.

Nach dem bisherig beschriebenen Aspekt der Erfindung wird der Einfluss einer sich verändernden Viskosität auf einen durch eine Druckdifferenz in einem Messkanal zu erzeugenden, konstanten Flüssigkeitsstrom durch eine gezielte Temperierung des Messflüssigkeitsstromes ausgeschaltet. Eine andere Möglichkeit (die nicht Teil der Erfindung ist) einer Vermeidung einer sich verändernden Viskosität als Störfaktor für die Messung besteht darin, jeweils die Temperatur der Messflüssigkeit in dem Messkanal zu erfassen und die jeweiligen Messwerte der Partikelzählung durch eine elektronisch hinterlegte, insbesondere experimentell in Abhängigkeit verschiedener Messflüssigkeitstemperaturen ermittelte Korrekturkurve zu korrigieren. Korrigieren bedeutet hierbei, dass viskositätsbedingte Volumenstromveränderungen des Messflüssigkeitsstromes nach einem elektronischen Korrekturspeicher neutralisiert werden, wobei der Korrekturspeicher mit jeweils Bezug auf eine zu vermessende Flüssigkeit zu erstellen ist. Dabei können selbstverständlich für verschiedene Flüssigkeiten unterschiedliche Korrekturwerte hinterlegt und jeweils nach Bedarf abgerufen werden.

In dieser zeigen
- Fig. 1: eine perspektivische Ansicht eines Partikelzählers,

- Fig. 2: einen Schnitt durch den Partikelzähler nach Fig. 1, aus dem der Aufbau eines in diesen integrierten Druckreduzierventils erkennbar ist.

Der Partikelzähler ist in einer, in eine Flüssigkeits-, insbesondere Hydraulikflüssigkeitsleitung, einsetzbaren Messeinrichtung ausgebildet. Zuströmende Flüssigkeit strömt in einem Hauptstrom in eine Hauptströmungskanalöffnung 1 eines Hauptströmungskanales 2 ein und verlässt diesen Hauptströmungskanal 2 durch eine Hauptströmungskanal-Auslassöffnung 3.

In den Hauptströmungskanal 2 ist ein federbelastetes Drosselventil 4 integriert. Dieses Drosselventil 4 umfasst einen, in einem Zylinder 5 verschiebbar gelagerten Kolben 6. Der Zylinder 5 ist dabei einenends mit einem geschlossenen Boden 7 in der Form eines Verschlussstopfens versehen und anderenends offen. Aus diesem offenen Ende des Zylinders 5 kann der Kolben 6 in den Strömungsweg des Hauptströmungskanales 2 eindringen und diesen Weg vollständig verschließen. Bei einem vollständigen Verschluss liegt der Kolben 6 an einem in dem Hauptströmungskanal 2 entsprechend angeordneten Ventilsitz 8 an. In Richtung auf eine Verschlusslage an dem Ventilsitz 8 ist der Kolben 6 durch eine im Inneren des Zylinders 5 angebrachte Feder 9 kraftbeaufschlagt. Die Feder 9 stützt sich dabei einenends an dem Kolben 6 und anderenends an dem Boden 7 des Zylinders ab. Die Achse des Zylinders 5, längs der sich der Kolben 6 bewegen kann, ist derart gegenüber der Längsachse des Hauptströmungskanales 2 geneigt, dass von der Einlassöffnung 1 in den Hauptströmungskanal 2 einströmende Flüssigkeit drosselventilöffnend auf die Stirnseite des Kolbens 6 einwirken kann. Dieser Öffnungskraft wirkt die Kraft der Feder 9, die hier als Druckfeder ausgebildet ist, entgegen. Die Durchströmungsrichtung des Hauptströmungskanales 2 ist mit Strömungspfeilen S gekennzeichnet. Stromab des Kolbens 6 des Drosselventils 4 ist der Hauptströmungskanal 2 über einen Verbindungskanal 10 in beispielsweise der Form eines Drosselkanals mit dem Inneren des Zylinders 5 druckausgleichend verbunden.

Durch eine solche Ausbildung und Anordnung des Drosselventils 4 wird in dem Hauptströmungskanal 2 ein von dem Absolutdruck der dort strömenden Flüssigkeit unabhängiger, konstanter Druckabfall auf eine äußerst einfache Weise erzeugt und sicher gewährleistet.

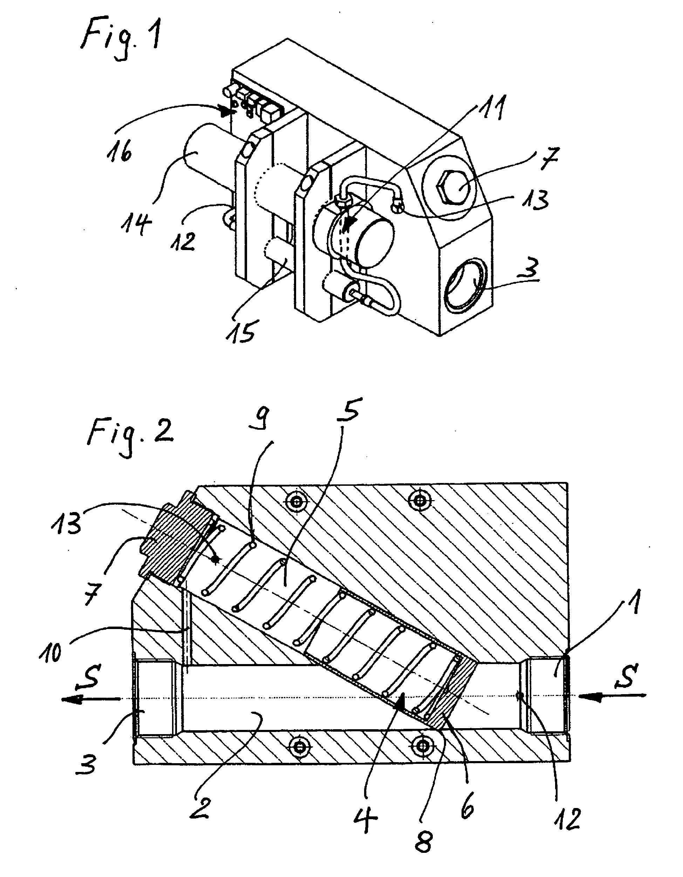

Die erfindungsgemäße Lichtschrankenmessung nach dem im Stand der Technik an sich hinreichend bekannten Abdunkelungs- bzw. Lichtblockadeverfahren erfolgt in einem Messkanal 11, der als ein das Drosselventil 4 überbrückender Bypass zu dem Hauptströmungskanal 2 ausgebildet ist. In der Fig. 2 sind die Anschlussöffnungen dieses Messkanales eingezeichnet, wobei der stromauf des Drosselventiles 4 liegende Messkanaleinlass mit 12 und der Messkanalauslass mit 13 bezeichnet sind. Dem Messkanal 11 ist eine an sich bei einem solchen Partikelzähler bekannte Sensoreinrichtung 14 zugeordnet.

Zwischen dem Messkanaleinlass 12 und dem Lichtschrankenbereich dieses Messkanales 11 im Bereich der Sensoreinrichtung 14 durchdringt dieser Messkanal 11 in seinem Zuleitungsbereich eine Heizeinrichtung 15. Innerhalb dieser Heizeinrichtung 15 wird die durchströmende Flüssigkeit auf einen vorgegebenen Temperaturwert außerhalb der möglichen Betriebstemperaturen erhitzt, wodurch diese Flüssigkeit die Sensoreinrichtung 14 stets mit einer gleichen, konstanten Temperatur durchströmt.

Der elektronische Teil des Partikelzählers ist in der Fig. 1 mit 16 angedeutet. Dieser Elektronikteil 16 umfasst die Einrichtungen für eine beispielsweise telemetrische Fernanzeige der Messwerte aus der Sensoreinrichtung 14 einschließlich deren insbesondere in diesem Elektronikteil ausgewerteten Messwerte. Die Anzeige der ausgewerteten Messwerte kann in an sich bekannter Weise digital oder analog an einer beliebigen Stelle erfolgen. Eine telemetrische Fernanzeige ist beispielsweise bei einem Einsatz eines erfindungsgemäßen Partikelzählers zur Überwachung eines Hydraulikölkreislaufes in einer Offshore-Windkraftanlage besonders interessant.

Das Drosselventil 4 kann beispielsweise durch eine entsprechende Feder 9 für einen konstanten Druckabfall von 0,5 bar innerhalb des Hauptströmungskanales 2 ausgelegt sein. Der hierdurch und durch die Größe des Strömungsquerschnittes des Messkanales 11 festgelegte Messkanalvolumenstrom kann beispielsweise 50 ml/min betragen.

Als Sensoreinrichtung 14 kann beispielsweise eine Einkanal-Lasereinrichtung eingesetzt werden. Die erzielbaren Messwerte und deren Auswertungsmöglichkeiten entsprechen dem bei gattungsgemäßen Partikelzählern allgemein bekannten Stand der Technik, weshalb hierauf bei der Beschreibung der vorliegenden Erfindung nicht im Einzelnen eingegangen werden muss.

Hingewiesen soll jedoch auf Folgendes werden.

Mit Bezug auf den Einsatz eines Partikelzählers bei einer bestimmten, zu vermessenden Flüssigkeit ist jeweils eine Kalibrierung der Messeinrichtung mit einer auf die zu vermessenden Flüssigkeit abgestimmten Prüfflüssigkeit erforderlich. Diese Prüfflüssigkeit ist jeweils mit einem genau definierten Prüfstaub versetzt.

Mit der erfindungsgemäßen Messeinrichtung ist es möglich, die Teilchengröße in einem Messfenster festzustellen, so dass die Auswertung des Messergebnisses durch einfaches Umschalten der Messeinrichtung auf voreingestellte Klassen von Partikelgrößen umgestellt werden kann. Das Umstellen kann durch die Elektronik automatisch erfolgen, so dass ein prinzipiell einkanaliges Messgerät durch wiederholtes Umschalten auf eine andere Messklasse wie ein Mehrkanalmessgerät arbeiten kann. Hierin besteht eine Besonderheit der vorliegenden Erfindung.

Mit einer erfindungsgemäßen Messeinrichtung kann ohne weiteres eine Messgenauigkeit von mindestens etwa +/- 20 % gewährleistet werden.

## Patentansprüche

1. Nach dem Abdunkelungs- bzw. Lichtblockadeverfahren arbeitender Partikelzähler zum Zählen von Fremdpartikeln in einem Flüssigkeitsstrom, insbesondere in einem Hydraulikflüssigkeitsstrom, mit einer Lichtschranke, deren Lichtstrahl einen von einem Bypass-Teilstrom des Flüssigkeitsstromes durchströmbaren Messkanal durchdringt und mit einer dem Empfänger der Lichtschranke nachgeschalteten Auswerteelektronik,
**gekennzeichnet durch** die Merkmale,
- der Partikelzähler umfasst eine auf den Flüssigkeitsstrom einwirkende Druckregeleinrichtung (4), die dem zwischen Zu- und Abfluss des Messkanals (11) liegenden, die Lichtschranke aufnehmenden Bereich, bei strömender Flüssigkeit eine von den Strömungseigenschaften des Flüssigkeitshauptstromes unabhängige, definiert vorgebbare Druckdifferenz aufzwingt,
- der Partikelzähler umfasst eine Heiz- oder Kühleinrichtung (15) zur Temperierung des den Messkanal (11) durchströmenden Teilstromes auf einen vorgebbaren Temperaturwert,
- die Druckregeleinrichtung (4) ist als ein Drosselventil ausgebildet mit einem **durch** Federkraft beaufschlagten, innerhalb des Ventildrosselweges liegenden Verschlusskörper (6), dessen Öffnungs- bzw. Verschlussstellung von der an diesem an- und abströmseitig anstehenden Druckdifferenz abhängig ist, wobei die den Verschlusskörper (6) belastende Federkraft dem anströmseitig auf den Verschlusskörper (6) ausgeübten Staudruck drosselwirksam entgegengerichtet ist.

2. Partikelzähler nach Anspruch 1,
**gekennzeichnet durch** die Merkmale,
- der Verschlusskörper ist ein in einem Zylinder (5) verschiebbar gelagerter Kolben (6),
- der Zylinder (5) ist einenends von einem festen Zylinderboden (7) und anderenends von dem verschiebbaren Kolben (6) begrenzt,
- der Kolben (6) taucht mit einem aus den Zylinder (5) herausragenden Endbereich in den Flüssigkeitsstrom ein,
- der Kolben (6) ist **durch** die Kraft einer Feder (9) in Richtung auf ein Verlassen des Zylinders (5) belastet,
- die Federkraft ist einer **durch** anströmende Flüssigkeit auf den Kolben (6) verschlussöffnend wirkenden Kraft entgegengerichtet,
- der von dem Kolben (6) eingeschlossene Raum des Zylinders (5) ist **durch** einen Verbindungskanal (10) mit der Abströmseite des Kolbens (6) innerhalb des Flüssigkeitsstromes verbunden,
- die an dem Messkanal (11) konstant bei strömender Flüssigkeit anstehende Druckdifferenz ist **durch** die Kraft der den Kolben (6) beaufschlagenden Feder (9) bestimmt.

3. Partikelzähler nach Anspruch 1 oder 2,
**dadurch gekennzeichnet,**
**dass** er Mittel für eine Fernanzeige der Messwerte umfasst.

4. Partikelzähler nach Anspruch 3,
**dadurch gekennzeichnet,**
**dass** er Mittel für eine telemetrische Fernanzeige der Messwerte umfasst.

## Claims

1. Subsequent to the darkening or light-blocking process of an operating particle counter for counting foreign particles in a fluid stream, in particular in a hydraulic fluid stream, with a light barrier the light ray of which penetrates a measuring canal that can be flowed through by a bypass branch current of the fluid stream, and with evaluation electronics downstream from the receiver of the light barrier,
**characterised by** the features
- the particle counter comprises a pressure-regulating device (4) that affects the fluid stream, said pressure-regulating device forcing, with a flowing fluid, the region, which is positioned between inlet and outlet of measuring canal (11) and contains the light barrier, a pressure difference that can be predefined and is independent of the flow properties of the primary fluid current,
- the particle counter comprises a heating or a cooling device (15) for controlling the temperature of the branch current, which is flowing through the measuring canal (11), to a predeterminable temperature value,
- the pressure-regulating device (4) is configured as a choke valve with a sealing body (6) that is impinged upon by a spring load and is positioned within the choke valve path, the opening and closing position of which being a function of the pressure difference existing on the upstream and downstream side thereof, wherein the spring load putting pressure on the sealing body (6) is directed against the dynamic pressure exerted on the upstream side on the sealing body (6) with a throttle effect.

2. The particle counter as specified in claim 1,
**characterised by** the features that
- the sealing body is a piston (6) that is mounted in a displaceable manner in a cylinder (5),
- the cylinder (5) limited on one end by a fixed cylinder floor (7) and is limited on the other end by the displaceable piston (6),
- the piston (6), along with an end region that protrudes from the cylinder (5), dips into the fluid stream,
- the piston (6) is loaded by the force of a spring (9) in the direction of a leaving of the cylinder (5),
- the spring force is directed against a force that acts in a seal-opening manner on the fluid flowing against the piston (6),
- the space of the cylinder (5) that is enclosed by the piston (6) is connected to the flow-off side of the piston (6) within the fluid stream by means of a connecting canal (10),
- the pressure difference that is constantly present at the measuring canal (11) with a flowing fluid is determined by the force of the spring (9) impinging upon the piston (6).

3. The particle counter as specified in claim 1 or claim 2,
**characterised in that**
said particle counter comprises means for a remote indication of the measured values.

4. The particle counter as specified in claim 3,
**characterised in that**
said particle counter comprises means for a telemetric remote indication of the measured values.

## Revendications

1. Compteur de particules fonctionnant selon le procédé d'obscurcissement, resp. de blocage de lumière pour compter des particules étrangères dans un courant de liquide, notamment dans un courant de liquide hydraulique, comportant une cellule de détection photoélectrique, dont le rayon lumineux traverse un canal de mesure à travers lequel s'écoule un courant partiel de dérivation du courant de liquide, et comportant un module électronique d'évaluation branché en aval du récepteur de la cellule de détection photoélectrique,
**caractérisé par** les caractéristiques
- le compteur de particules comprend un dispositif de régulation de pression (4) agissant sur le courant de liquide, lequel impose à la zone située entre le débit entrant et le débit sortant du canal de mesure (11), renfermant la cellule de détection photoélectrique, une différence de pression prescrite définie, indépendante des propriétés d'écoulement du courant principal de liquide quand le liquide s'écoule,
- le compteur de particules comprend un dispositif de chauffage ou de refroidissement (15) pour tempérer le courant partiel traversant le canal de mesure (11) à une valeur de température prescrite,
- le dispositif de régulation de pression (4) est conçu comme une soupape d'étranglement comportant un corps d'obturation sollicité par une force de ressort, situé à l'intérieur du trajet d'étranglement de la soupape, dont la position d'ouverture, resp. de fermeture est dépendante de la différence de pression suscitée sur celui-ci du côté flux entrant et du côté flux sortant, moyennant quoi la force de ressort chargeant le corps d'obturation (6) est dirigée à l'encontre de la pression dynamique exercée sur le corps d'obturation (6) de manière à favoriser l'étranglement.

2. Compteur de particules selon la revendication 1,
**caractérisé par** les caractéristiques,
- le corps d'obturation est un piston (6) positionné de manière déplaçable dans un cylindre (5),
- le cylindre (5) est délimité à une extrémité par un fond de cylindre fixe (7) et à une autre extrémité par le piston déplaçable (6),
- le piston (6) plonge par une portion d'extrémité dépassant hors du cylindre (5) dans le courant de liquide,
- le piston (6) est chargé par la force d'un ressort (9) dans la direction où il quitte le cylindre (5),
- la force de ressort est dirigée à l'encontre d'une force agissant de manière à ouvrir l'obturation sur le piston à travers le flux entrant de liquide,
- l'espace du cylindre (5) occupé par le piston (6) est relié par un canal de liaison (10) au côté de flux sortant du piston (6) à l'intérieur du courant de liquide,
- la différence de pression constante quand le liquide s'écoule suscitée sur le canal de mesure (11) est déterminée par la force du ressort (9) sollicitant le piston (6).

3. Compteur de particules selon la revendication 1 ou 2,
**caractérisé en ce que**
il comprend des moyens permettant un affichage à distance des valeurs de mesure.

4. Compteur de particules selon la revendication 3,
**caractérisé en ce que**
il comprend des moyens permettant un affichage à distance télémétrique des valeurs de mesure.
